# FASCICULE DE BREVET EUROPEEN

(11) **EP 1 681 480 B1**
(45) Date de publication et mention de la délivrance du brevet: **23.11.2011**
(21) Numéro de dépôt: 06100333.1
(22) Date de dépôt: 13.01.2006
(51) Int. Cl.: F16C 33/66, F16C 33/58

(54) **Ensemble à roulement comprenant une double injection de liquide lubrifiant, et engin aéronautique comportant au moins un tel ensemble**
Wälzlageranordnung umfassend Doppel-Schmierstoffeinspritzung sowie Luftfahrzeug umfassend wenigstens eine solche Anordnung
Rolling bearing assembly comprising dual injection of liquid lubricant and aircraft comprising at least one such assembly

(30) Priorité: 17.01.2005 FR 0550129
(43) Date de publication de la demande: 19.07.2006
(73) Titulaire: SNECMA, 75015 Paris (FR)
(72) Inventeur: Plona, Daniel, Georges, 77870, Vulaines sur Seine (FR)
(74) Mandataire: Poulin, Gérard

(56) Documents cités:
- FR-A- 2 475 656
- FR-A- 2 740 187
- FR-A- 2 841 305

## Description

### DOMAINE TECHNIQUE

La présente invention se rapporte de façon générale à un ensemble à roulement comprenant une pièce fixe, une pièce tournante ainsi qu'un roulement interposé entre ces pièces fixe et tournante, l'ensemble comprenant en outre un premier injecteur de liquide lubrifiant exclusivement alimenté par une source de liquide lubrifiant non-recyclée, telle qu'un réservoir de carburant de missile.

De plus, l'invention se rapporte également à tout engin aéronautique équipé d'un turbomoteur pour sa propulsion, comprenant au moins un tel ensemble à roulement.

### ÉTAT DE LA TECHNIQUE ANTÉRIEURE

Sur les engins aéronautiques équipés d'un ou plusieurs turbomoteurs, tels qu'un missile, chaque turbomoteur intègre au moins un ensemble à roulement comprenant globalement un arbre de rotor, un stator, ainsi qu'un roulement interposé entre ces derniers.

Dans ce type d'ensemble très répandu, du liquide lubrifiant est amené au sein du roulement afin de mouiller les surfaces fonctionnelles de celui-ci, et donc dans le but de renouveler le film de liquide et de collecter les calories générées lors de la mise en rotation de l'arbre de rotor constituant la pièce tournante de l'ensemble.

De façon connue, dans ces engins aéronautiques, une lubrification classique des roulements du type à injection de graisse périodique s'avère insuffisante, en raison des performances élevées exigées dans ce domaine telles que la grande vitesse de rotation de l'arbre de rotor.

Ainsi, pour pouvoir répondre correctement aux exigences précitées, la technique de lubrification employée doit être en mesure d'apporter suffisamment de liquide lubrifiant au roulement de manière à ce que l'épaisseur du film séparateur situé entre les surfaces fonctionnelles ne se dégrade pas, et de manière à ce que le température fonctionnelle de ce roulement ne s'élève pas de façon trop conséquente. A cet égard, il est indiqué que lorsque la lubrification reste trop peu importante, les deux phénomènes cités ci-dessus s'aggravent mutuellement jusqu'à éventuellement conduire à la dégradation du roulement ayant atteint une température critique.

Pour éviter que de telles conséquences ne surviennent, il a été proposé diverses solutions telles que celle consistant à prévoir une lubrification dynamique dans laquelle le liquide lubrifiant est mis en circulation en continue dans un circuit fermé, et éjecté entre les bagues du roulement avant de ressortir et d'évacuer la chaleur produite par ce roulement comme décrit dans le document FR-A-2475656.

Si cette solution de l'art antérieur s'avère satisfaisante en termes de lubrification du roulement, en ce sens qu'elle permet d'obtenir un film séparateur qui ne se dégrade pas, elle présente néanmoins un inconvénient non négligeable.

En effet, cette technique d'alimentation permanente nécessite de prévoir un circuit fermé complexe et encombrant intégrant des écopes de récupération, des conduits, des filtres et une pompe, ce qui est néfaste en termes de masse globale et de coût du turbomoteur comprenant un tel ensemble à roulement à lubrification dynamique.

Cette solution de lubrification dynamique en circuit fermé peut être remplacée par une technique dite de « lubrification perdue », dans laquelle l'injecteur projetant le liquide lubrifiant entre les bagues du roulement est exclusivement alimenté en liquide lubrifiant par une source non-recyclée, impliquant donc que ce liquide transitant par l'injecteur n'est pas réinjecté dans la circuit d'alimentation après avoir été extrait du roulement, contrairement à la solution décrite précédemment.

L'avantage relatif à une telle configuration réside dans le fait que le circuit d'alimentation requis ne fonctionne pas en boucle fermée, ce qui le rend largement moins contraignant en termes de coût, d'encombrement et de masse. Il est noté que cette spécificité est particulièrement avantageuse dans le cadre de l'utilisation de l'ensemble à roulement dans un engin aéronautique tel qu'un missile ou un système de lancement, où la notion de réduction de masse constitue une préoccupation permanente.

Néanmoins, le prélèvement de liquide lubrifiant s'effectue alors habituellement au niveau du réservoir de carburant de l'engin concerné, qui constitue donc la source de liquide lubrifiant non-recyclée. Cela implique que la nécessité d'établir une lubrification abondante et satisfaisante peut éventuellement conduire à prélever une quantité de lubrifiant carburant non-recyclé suffisamment importante pour affecter sensiblement l'autonomie / le rayon d'action de l'engin.

Par conséquent, une réduction du débit de lubrifiant carburant prélevé au niveau du réservoir est donc souhaitable, mais peut rapidement engendrer une dégradation de l'épaisseur du film séparateur situé entre les surfaces fonctionnelles du roulement, ainsi donc qu'une dégradation de ce dernier.

### EXPOSÉ DE L'INVENTION

L'invention a donc pour but de proposer un ensemble à roulement comprenant une pièce fixe, une pièce tournante ainsi qu'un roulement interposé entre celles-ci, et comportant par ailleurs un système de lubrification du roulement remédiant au moins partiellement aux inconvénients mentionnés ci-dessus relatifs aux systèmes de lubrification rencontrés dans les réalisations de l'art antérieur.

D'autre part, l'invention a également pour objet de présenter un engin aéronautique équipé d'un turbomoteur pour sa propulsion, et comprenant au moins un tel ensemble à roulement.

Pour ce faire, l'invention a donc pour objet un ensemble à roulement comprenant une pièce fixe, une pièce tournante ainsi qu'un roulement interposé entre les pièces fixe et tournante, le roulement comprenant une bague intérieure et une bague extérieure présentant chacune une piste de circulation en contact avec des éléments de roulement du roulement, et étant respectivement fixées à l'une et l'autre des pièces fixe et tournante, cet ensemble comprenant en outre un premier injecteur de liquide lubrifiant destiné à être exclusivement alimenté en liquide lubrifiant non-recyclé. Selon l'invention, la bague fixée à la pièce fixe est traversée par une pluralité d'orifices de drainage, et l'ensemble comporte en outre un second injecteur de liquide lubrifiant alimenté automatiquement en liquide lubrifiant drainé par l'intermédiaire de moyens de collecte du liquide lubrifiant drainé sortant des orifices de drainage, ces moyens de collecte communiquant simultanément avec un circuit de réinjection relié au second injecteur, ainsi qu'avec un circuit de dérivation destiné à l'évacuation d'un surplus de liquide lubrifiant drainé.

Il est donc à comprendre que l'invention propose un ensemble à roulement intégrant des moyens permettant d'effectuer une double injection de liquide lubrifiant. Effectivement, le premier injecteur permet d'effectuer une première injection de liquide lubrifiant non-recyclé dans le roulement, c'est-à-dire de lubrifier avec du liquide qui n'effectue qu'un seul passage à travers ce dernier, et qui provient d'une source que l'on peut donc qualifier de non-renouvelée en fonctionnement ou de non-recyclée, appartenant à un circuit non-fermé tel que celui décrit dans l'art antérieur pour la solution de lubrification perdue.

Simultanément, le second injecteur permet d'engendrer une seconde injection automatique de liquide lubrifiant dans le roulement, c'est-à-dire de lubrifier avec du liquide prélevé au sein même du roulement, sans que cela ne nécessite de prévoir des moyens encombrants et coûteux tels qu'une pompe ou des filtres, comme ceux décrits dans l'art antérieur pour la solution de lubrification en circuit fermé. En effet, cette seconde injection automatique repose sur l'utilisation de l'énergie dynamique créée par la rotation des éléments de l'ensemble à roulement, qui permet une éjection d'au moins une partie du liquide se trouvant au sein du roulement vers les orifices de drainage traversant la bague fixée à la pièce fixe, et qui est suffisante pour acheminer cette partie de liquide jusqu'au second injecteur qui peut alors la distribuer à nouveau en direction du roulement.

Ainsi, dans l'ensemble à roulement selon l'invention, le liquide lubrifiant mis en mouvement par l'énergie dynamique liée à la rotation pénètre alors dans les moyens de collecte en sortant des orifices de drainage, puis rejoint automatiquement le circuit de réinjection avant de finalement être réintroduit dans le second injecteur, sans que cela ne nécessite la présence d'une pompe dans ce second trajet de liquide lubrifiant. A titre indicatif, il est noté que la notion d'alimentation « automatique » employée ci-dessus traduit le fait que l'énergie nécessaire au prélèvement de liquide au sein du roulement et à la distribution de celui-ci depuis le second injecteur est uniquement apportée par l'énergie dynamique liée à la rotation des éléments de l'ensemble.

Il est précisé que l'une des particularités de la présente invention réside dans le fait que le liquide lubrifiant drainé sortant des orifices de drainage communique non seulement avec le circuit de réinjection, mais également avec le circuit de dérivation destiné à l'évacuation du surplus de liquide lubrifiant drainé. De cette manière, le débit de liquide lubrifiant drainé sortant du second injecteur est limité conjointement par la section de sortie de ce second injecteur, et par la présence de ce circuit de dérivation permettant au surplus de liquide drainé, ne pouvant être injecté par ce même injecteur de section calibrée, d'être automatiquement extrait de l'ensemble à roulement, toujours préférentiellement sans avoir recours à des moyens de pompage mais en utilisant l'énergie dynamique précitée.

Ceci permet alors avantageusement d'éviter les situations de gavage du roulement de l'ensemble, dans lesquelles la quantité de liquide lubrifiant totale apportée serait trop importante, et totalement incompatible avec un fonctionnement à grande vitesse.

Par conséquent, l'ensemble selon l'invention présente donc des avantages certains en termes de coût, de masse et d'encombrement, et permet surtout de pouvoir bénéficier d'un débit global de liquide lubrifiant supérieur à celui rencontré dans le cadre de la lubrification perdue antérieure pour un même débit prélevé au niveau de la source non-recyclée, ou encore de présenter un débit global de liquide identique à celui rencontré dans le cadre de cette lubrification perdue, pour un plus faible débit prélevé au niveau de cette source non-recyclée.

Naturellement, il est noté que ce dernier avantage est particulièrement intéressant lorsque l'ensemble selon l'invention est appliqué à un engin aéronautique tel qu'un missile ou un système de lancement quelconque, par exemple capable de lancer un drone ou similaire, dans la mesure ou l'autonomie / le rayon d'action de cet engin peuvent alors être augmentés en raison de la baisse du prélèvement de lubrifiant carburant.

De préférence, les moyens de collecte du liquide lubrifiant drainé sont constitués par au moins un espace annulaire pratiqué dans la pièce fixe, et dans lequel débouchent les orifices de drainage. Ainsi, on peut prévoir que chaque espace annulaire est constitué par une gorge.

Préférentiellement, les moyens de collecte du liquide lubrifiant drainé sont constitués par une pluralité de gorges espacées axialement et coopérant chacune avec un groupement circonférentiel d'orifices de drainage.

Par ailleurs, le circuit de réinjection comprend un conduit pratiqué dans la pièce fixe, et communiquant d'une part avec les moyens de collecte du liquide lubrifiant drainé, et d'autre part avec le second injecteur afin d'alimenter ce dernier.

De plus, le circuit de dérivation peut comprendre un conduit pratiqué dans la pièce fixe et communiquant avec les moyens de collecte du liquide lubrifiant drainé. Dans un tel cas, on peut de préférence prévoir, pour des raisons de facilité de fabrication, que le conduit du circuit de dérivation se situe dans le prolongement du conduit du circuit de réinjection.

De manière préférentielle, la pièce fixe est fixée à la bague extérieure, et la pièce tournante est fixée à la bague intérieure. Naturellement, une solution inverse à celle qui vient d'être exposée est également envisageable, sans sortir du cadre de l'invention.

Par ailleurs, les premier et second injecteurs sont fixés à la pièce fixe, et orientés de façon à éjecter le liquide lubrifiant entre les deux bagues, où se situent les éléments de roulement qui peuvent indifféremment être des billes ou des rouleaux.

En outre, l'invention se rapporte à un engin aéronautique équipé d'un turbomoteur pour sa propulsion et comprenant au moins un tel ensemble à roulement, la pièce tournante étant constituée par un arbre de rotor du turbomoteur, et le premier injecteur étant exclusivement alimenté en liquide lubrifiant par un réservoir de carburant de cet engin. Ainsi, on peut donc comprendre que l'invention trouve une application préférée pour les engins aéronautiques propulsés dont la lubrification des roulements est au moins partiellement assurée par du liquide lubrifiant carburant provenant du réservoir de carburant de cet engin.

A ce titre, l'engin aéronautique propulsé mentionné ci-dessus peut être un missile, ou un système de lancement, par exemple capable de lancer un drone.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un missile intégrant un ensemble à roulement selon un premier mode de réalisation préféré de la présente invention ;
- la figure 2 représente une vue agrandie en coupe longitudinale de l'ensemble à roulement de la figure 1 ;
- la figure 3 représente une vue partielle en coupe prise le long de la ligne III-III de la figure 2 ; et
- la figure 4 représente une vue en coupe longitudinale d'un ensemble à roulement selon un second mode de réalisation préféré de la présente invention.

### EXPOSÉ DÉTAILLÉ DE MODES DE RÉALISATION PRÉFÉRÉS

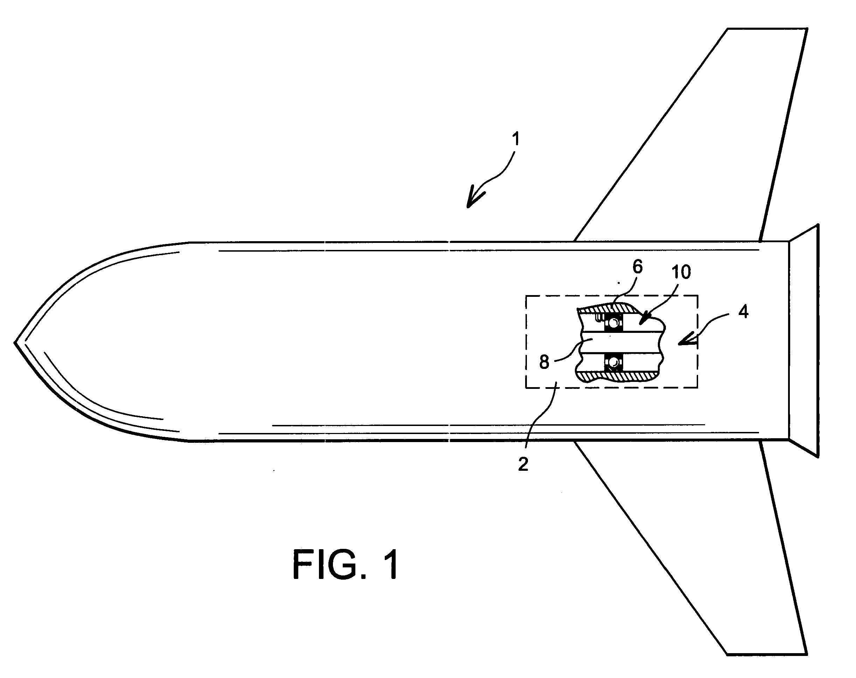

En référence tout d'abord à la figure 1, on voit un missile 1 équipé d'un turbomoteur 2 pour sa propulsion, ce turbomoteur 2 prenant par exemple la forme d'un turboréacteur.

Ce missile 4, également objet de la présente invention, intègre un ensemble à roulement 4 selon un premier mode de réalisation préféré de la présente invention, cet ensemble 4 comprenant globalement un carter 6 du turbomoteur 2, et un arbre de rotor 8 couplé au carter 6 par l'intermédiaire d'un roulement lubrifié 10, les éléments 6 et 8 étant respectivement dénommées pièces fixe et tournante dans la suite de la description.

Il est noté que si l'application préférentielle décrite à présent concerne celle d'un missile, il est bien entendu à comprendre que l'ensemble à roulement 4 selon l'invention peut s'appliquer à tous les engins, aéronautique ou non, pour lesquels la lubrification du roulement concerné est destinée à être assurée au moins en partie par une source de liquide lubrifiant non-recyclée, telle que le réservoir de carburant de ce missile.

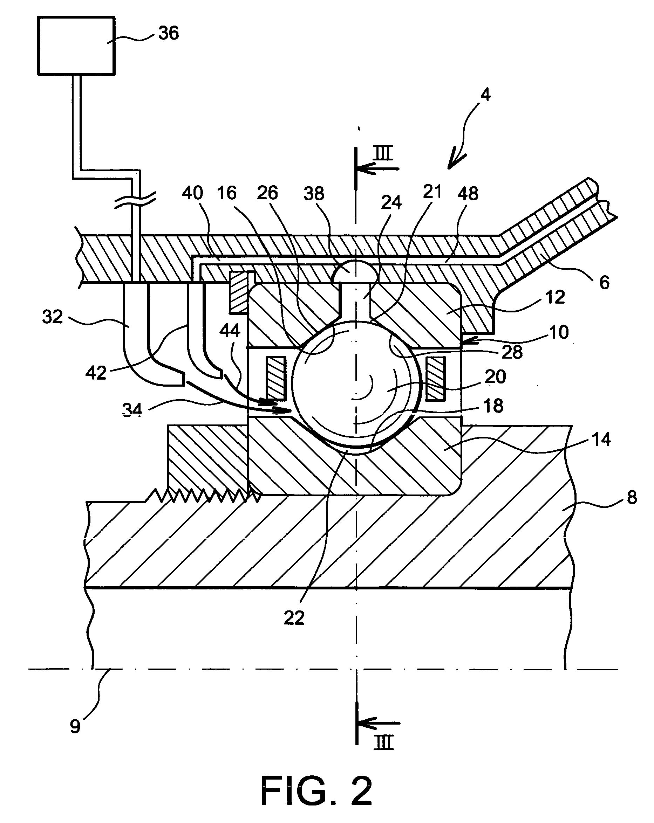

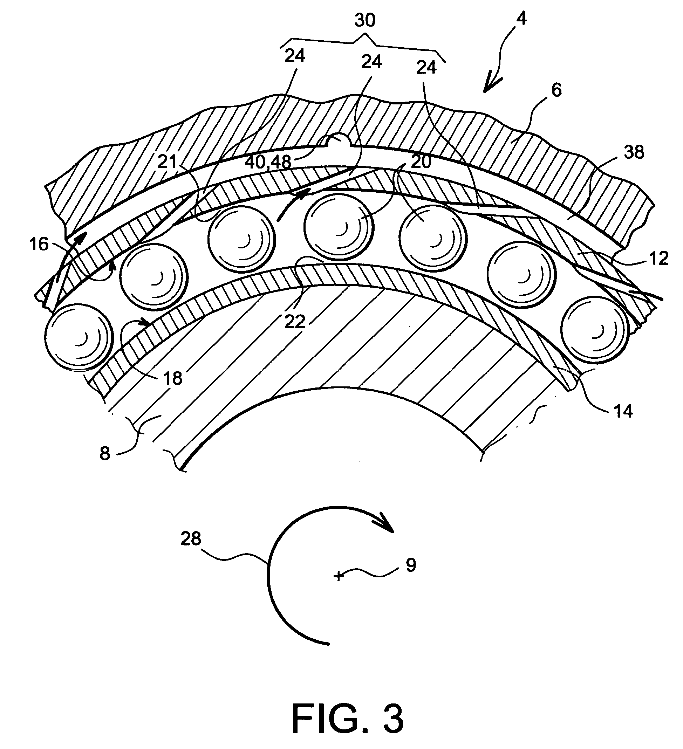

En référence plus spécifiquement aux figures 2 et 3 représentant l'ensemble à roulement 4 de manière détaillée, on peut à nouveau apercevoir la pièce fixe 6 entourant la pièce tournante 8, ainsi que le roulement 10 de cet ensemble 4 effectivement interposé entre ces pièces 6 et 8, ces éléments étant centrés sur un axe 9 correspondant à l'axe de rotation de l'ensemble.

La face externe d'une bague extérieure 12 du roulement 10 est donc en contact avec la pièce fixe 6 montée fixement sur cette bague extérieure 12, et la face externe d'une bague intérieure 14 du roulement 10 est quant à elle en contact avec la pièce tournante 8 montée fixement sur cette bague intérieure 14.

Les faces opposées de ces bagues 12, 14, soit les faces internes dirigées l'une vers l'autre, sont des pistes 16 et 18 de roulement dans lesquelles des billes 20 sont retenues. Les pistes 16, 18 ne sont pas toriques mais ont une section en forme d'ogive, avec un sommet 21 ou 22 appartenant à une circonférence centrale dans laquelle on a ménagé, pour la piste 16 de la bague extérieure 12 fixée à la pièce fixe 6, des orifices de drainage 24 qui traversent complètement cette bague 12. Les billes 20 ne recouvrent donc jamais ces orifices 24 mais touchent la bague intérieure 14 par deux points de contact latéraux (non référencés), et la bague extérieure 12 par deux autres points de contact latéraux 26 et 28, de part et d'autre des orifices 24. A cet égard, même si cela n'est pas le cas dans ce premier mode de réalisation préféré, il est noté que les pistes 16, 18 pourraient être toriques, sans sortir du cadre de l'invention.

Pour favoriser l'écoulement de liquide lubrifiant, les orifices 24 de la bague extérieure 12 sont inclinés dans un sens de rotation 28 de la pièce tournante 8 par rapport à la pièce fixe 6, comme cela sera exposé ci-après. De plus, comme on peut le voir sur la figure 3, ces orifices de drainage 24 sont répartis de façon uniforme autour de la bague intérieure 12, et constituent ainsi un groupement circonférentiel 30 autour d'une circonférence (non représentée) perpendiculaire à l'axe 9.

D'autre part, l'ensemble 4 est conçu de manière à comprendre un premier injecteur 32 de liquide lubrifiant, cet injecteur 32 étant solidaire de la pièce fixe 6 et étant orienté de façon à pulvériser du liquide entre les deux bagues 12, 14. A titre d'exemple indicatif, l'orientation peut être adaptée de sorte que le liquide lubrifiant sortant du premier injecteur 32 percute une partie inférieure des billes 20 remplissant la fonction d'éléments de roulement, comme cela est représenté schématiquement par la flèche 34.

Ce premier injecteur 32 est destiné à être alimenté en liquide exclusivement par une source de liquide lubrifiant non-recyclée 36, qui dans ce mode de réalisation préféré correspond au réservoir de carburant du missile 1. Ainsi, il est à comprendre que le premier injecteur 32 éjecte uniquement du liquide lubrifiant qui n'a pas encore transité à travers le roulement 10, ce liquide étant appelé « liquide lubrifiant prélevé » dans la suite de la description.

Il est noté que le raccordement entre le premier injecteur 32 et le réservoir 36 s'effectue de préférence d'une façon connue de l'homme du métier et qui peut être identique ou similaire à celles rencontrées dans les solutions à lubrification perdue de l'art antérieur, à savoir par exemple par utilisation d'une pompe de carburant principale (haute pression), par utilisation d'une pompe de gavage (électrique noyée dans le réservoir), ou encore par utilisation d'une pressurisation du réservoir permettant de se passer de la pompe de gavage. Par conséquent, ce raccordement ne sera pas davantage décrit.

En outre, l'ensemble à roulement 4 dispose d'un second trajet de liquide lubrifiant comprenant les orifices 24 de drainage hors du roulement 10 de liquide lubrifiant.

Plus précisément, il est prévu une gorge 38 au niveau d'une surface interne de la pièce fixe 6, cette surface interne étant celle au contact de la surface externe de la bague extérieure 12. La gorge 38 constitue alors un espace annulaire situé autour de cette bague extérieure 12, et dans lequel débouche chacun des orifices de drainage 24 du groupement 30. De cette façon, on peut comprendre que la gorge 38 peut être assimilée à des moyens de collecte du liquide lubrifiant drainé sortant des orifices 24.

En effet, le liquide lubrifiant se trouvant au sein du roulement 10 est drainé et chassé automatiquement par la force centrifuge très élevée produite par la rotation de l'arbre de rotor 8, vers ces orifices inclinés de drainage 24, sans que cela ne nécessite de prévoir des moyens encombrants et coûteux tels qu'une pompe. A cet égard, il est noté que cette technologie de drainage par la force centrifuge est également décrite dans le document FR-A-2 740 187.

Dans l'ensemble selon l'invention, le liquide lubrifiant arrivant entre les deux bagues 12, 14 contourne alors les billes 20 en passant entre elles et à côté d'elles, et rejoint assez rapidement les orifices 24, avant donc de pénétrer automatiquement dans la gorge encerclante 38 et de suivre le chemin de lubrifiant qui va à présent être décrit, et qui constitue une des particularités de l'invention.

Tout d'abord, un circuit de réinjection prenant préférentiellement la forme d'un conduit 40 pratiqué dans la pièce fixe 6 communique à l'une de ses extrémités avec la gorge 38, et à l'autre de ses extrémités avec un second injecteur 42. Par voie de conséquence, le liquide lubrifiant drainé intégrant la gorge 38 est automatiquement poussé à emprunter le conduit 40 précité, pour ensuite pénétrer automatiquement à l'intérieur du second injecteur 42 depuis lequel il finit par être à nouveau introduit/pulvérisé entre les deux bagues 12, 14. Toujours à titre d'exemple indicatif, l'orientation peut être adaptée de sorte que le liquide lubrifiant drainé sortant du second injecteur 42 percute une partie inférieure des billes 20 remplissant la fonction d'éléments de roulement, comme cela est représenté schématiquement par la flèche 44. De plus, comme cela est visible sur la figure 2, les deux injecteurs 32, 42 fixés à la pièce fixe 6 sont de préférence situés l'un à côté de l'autre, mais pourraient bien évidemment être décalés circonférentiellement, sans sortir du cadre de l'invention.

Ainsi, il est à comprendre que ce circuit de réinjection 40 interposé entre la gorge 38 et le second injecteur 42 est totalement dépourvu de moyens de pompage du liquide lubrifiant drainé, ce qui le rend simple à fabriquer, et peu encombrant.

D'autre part, un circuit de dérivation prenant préférentiellement la forme d'un conduit 48 pratiqué dans la pièce fixe 6 communique à l'une de ses extrémités avec la gorge 38, ce conduit 48 étant destiné à l'évacuation d'un surplus de liquide lubrifiant drainé hors de l'ensemble 4, par l'intermédiaire de son autre extrémité (non représentée). Comme on peut le voir sur la figure 2, les conduits 40 et 48 sont de préférence situés dans le prolongement l'un de l'autre, et chacun est sensiblement parallèle à l'axe 9 de telle sorte qu'ils peuvent être assimilés à un même conduit communiquant avec la gorge 38.

Ainsi, lorsque le débit de liquide maximum est atteint au niveau du second injecteur 42, ce débit maximum étant par ailleurs fixé par la section de son orifice de sortie, la partie du liquide lubrifiant drainé se situant dans la gorge 38 et ne pouvant transiter par cet injecteur 42 se voit alors automatiquement dirigée vers le conduit 48 et évacuée hors de l'ensemble 4 par ce même conduit, toujours sans que cela ne nécessite de moyens de pompage.

A cet égard, cette partie drainée et évacuée de liquide lubrifiant peut éventuellement rejoindre la partie de liquide lubrifiant prélevé qui a été introduite dans le roulement 10, et qui n'a pas été drainée par les orifices 24 prévus à cet effet. Effectivement, il est indiqué que tout le liquide lubrifiant prélevé au niveau du réservoir 36 et injecté dans le roulement 10 ne rejoint pas le second trajet de liquide, puisqu'une partie de ce liquide prélevé est perdue lors de son passage dans le roulement 10, et extraite automatiquement hors de l'ensemble 4, par exemple par gravité.

Au vu de ce qui précède, l'ensemble à roulement 4 prévoit donc de lubrifier les éléments de roulement du type billes 20 simultanément et de façon continue à l'aide de liquide lubrifiant prélevé au niveau du réservoir 36 et pulvérisé par le premier injecteur 32, ainsi qu'à l'aide de liquide lubrifiant drainé sortant des orifices 24, et distribué en quantité limitée par le second injecteur 42.

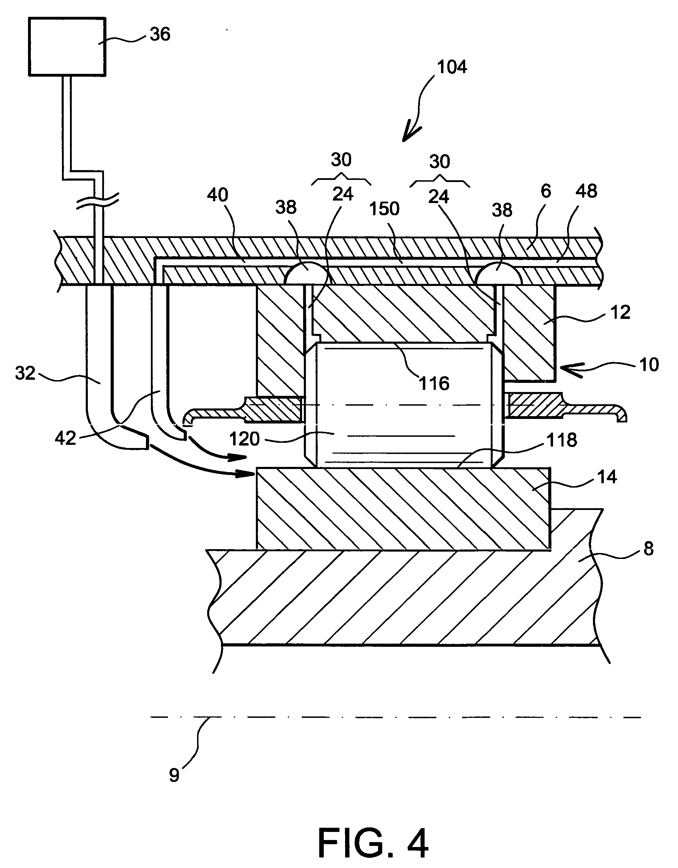

En référence à présent à la figure 4, on peut voir un ensemble à roulement 4 selon un second mode de réalisation préféré de la présente invention, ce second mode fonctionnant d'une façon similaire à celle présentée ci-dessus, notamment en ce sens qu'il ne nécessite pas de moyens de pompage pour assurer le second trajet de liquide lubrifiant.

Sur cette figure 4, les éléments portant les mêmes références numériques que celles attachées aux éléments des figures 1 à 3 correspondent à des éléments identiques ou similaires.

Ainsi, on peut noter une première différence par rapport au premier mode de réalisation décrit ci-dessus, qui réside dans l'utilisation d'un roulement 10 à rouleaux 120, et non à billes 20. Ainsi, les bagues extérieure 12 et intérieure 14 disposent respectivement de pistes toriques de roulement 116, 118 se faisant face et qui sont chacune en contact linéaire parallèle à l'axe 9 avec chacun des rouleaux 120.

Le liquide lubrifiant distribué depuis les injecteurs 32 et 42 épouse tout d'abord le flanc latéral des rouleaux 120, avant de rejoindre la surface cylindrique de section circulaire de ces derniers, et donc de se répandre sur les pistes toriques 116, 118. Ensuite, une partie de ce liquide est drainé par les orifices de drainage 24 de la même façon que celle exposée ci-dessus, c'est-à-dire du fait de la force centrifuge liée à la rotation de l'arbre de rotor 8, et sans nécessiter de moyens de pompage.

Par ailleurs, il est noté que ces orifices de drainage 24 prévus sur la bague extérieure 12, qui sont également de préférence inclinés dans le sens de rotation de la pièce tournante 8 par rapport à la pièce fixe 6, sont répartis en deux groupements circonférentiels 30 espacés selon l'axe 9. Ainsi, ces deux groupements circonférentiels 30 respectivement situés autour de deux circonférences (non représentée) perpendiculaires à l'axe 9, sont respectivement encerclées par deux gorges 38 identiques ou similaires à la gorge 38 du premier mode de réalisation.

Par conséquent, les deux gorges 38, qui peuvent par ailleurs être prévues en quantité supérieure, constituent des moyens de collecte du liquide lubrifiant drainé sortant des orifices de drainage 24, et communiquent avec les conduits 40 et 48 servant à la réinjection et à l'évacuation de surplus de liquide lubrifiant. De façon plus précise, on peut voir sur la figure 4 que la gorge 38 située la plus à gauche communique avec le conduit de réinjection 40 menant au second injecteur 42, tandis que la gorge 38 située la plus à droite communique avec le conduit d'évacuation 48 assurant l'extraction d'un surplus de liquide ne pouvant être distribué par le second injecteur calibré 42. De plus, les deux conduits 40, 48 ne se rejoignent plus au niveau de la gorge unique 38 comme cela était le cas dans le premier mode de réalisation, mais il est prévu un conduit intermédiaire 150 pratiqué entre les deux gorges 38 pour assurer cette jonction. De cette façon, il est comprendre que les trois conduits 40, 48, 150 se situent dans le prolongement les uns des autres de telle sorte qu'ils peuvent être assimilés à un même conduit sensiblement parallèle à l'axe 9, et communiquant avec les deux gorges 38.

Bien entendu, diverses modifications peuvent être apportées par l'homme du métier au missile 1 ainsi qu'aux ensembles 4 et 104 qui viennent d'être décrits, uniquement à titre d'exemples non limitatifs.

## Revendications

1. Ensemble à roulement (4, 104) comprenant une pièce fixe (6), une pièce tournante (8) ainsi qu'un roulement (10) interposé entre lesdites pièces fixe et tournante (6, 8), ledit roulement (10) comprenant une bague intérieure (14) et une bague extérieure (12) présentant chacune une piste de circulation (16, 18, 116, 118) en contact avec des éléments de roulement (20, 120) dudit roulement, et étant respectivement fixées à l'une desdites pièces fixe et tournante (6, 8) et à l'autre de ces mêmes pièces, ledit ensemble comprenant en outre un premier injecteur (32) de liquide lubrifiant destiné à être exclusivement alimenté en liquide lubrifiant non-recyclé, **caractérisé en ce que** la bague (12) fixée à ladite pièce fixe (6) est traversée par une pluralité d'orifices de drainage (24), et **en ce que** ledit ensemble comporte en outre un second injecteur (42) de liquide lubrifiant alimenté automatiquement en liquide lubrifiant drainé par l'intermédiaire de moyens de collecte (38) du liquide lubrifiant drainé sortant des orifices de drainage (24), lesdits moyens de collecte (38) communiquant simultanément avec un circuit de réinjection (40) relié audit second injecteur (42), ainsi qu'avec un circuit de dérivation (48) destiné à l'évacuation d'un surplus de liquide lubrifiant drainé.

2. Ensemble à roulement (4, 104) selon la revendication 1, **caractérisé en ce que** lesdits moyens de collecte (38) du liquide lubrifiant drainé sont constitués par au moins un espace annulaire pratiqué dans ladite pièce fixe (6), et dans lequel débouchent lesdits orifices de drainage (24).

3. Ensemble à roulement (4, 104) selon la revendication 2, **caractérisé en ce que** chaque espace annulaire est constitué par une gorge (38).

4. Ensemble à roulement (104) selon la revendication 3, **caractérisé en ce que** lesdits moyens de collecte du liquide lubrifiant drainé sont constitués par une pluralité de gorges (38) espacées axialement et coopérant chacune avec un groupement circonférentiel (30) d'orifices de drainage (24).

5. Ensemble à roulement (4, 104) selon l'une quelconque des revendications précédentes, **caractérisé en ce que** ledit circuit de réinjection comprend un conduit (40) pratiqué dans ladite pièce fixe (6), et communiquant d'une part avec lesdits moyens de collecte (38) du liquide lubrifiant drainé, et d'autre part avec le second injecteur (42) afin d'alimenter ce dernier.

6. Ensemble à roulement (4, 104) selon l'une quelconque des revendications précédentes, **caractérisé en ce que** ledit circuit de dérivation comprend un conduit (48) pratiqué dans ladite pièce fixe (6) et communiquant avec lesdits moyens de collecte (38) du liquide lubrifiant drainé.

7. Ensemble à roulement (4, 104) selon les revendications 6 et 7 combinées, **caractérisé en ce que** ledit conduit (48) du circuit de dérivation se situe dans le prolongement dudit conduit (40) du circuit de réinjection.

8. Ensemble à roulement (4, 104) selon l'une quelconque des revendications précédentes, **caractérisé en ce que** la pièce fixe (6) est fixée à ladite bague extérieure (12), et **en ce que** la pièce tournante (8) est fixée à ladite bague intérieure (14).

9. Ensemble à roulement (4, 104) selon l'une quelconque des revendications précédentes, **caractérisé en ce que** lesdits premier et second injecteurs (32, 42) sont fixés à ladite pièce fixe (6), et orientés de façon à éjecter le liquide lubrifiant entre les deux bagues (12, 14).

10. Ensemble à roulement (4) selon l'une quelconque des revendications précédentes, **caractérisé en ce que** lesdits éléments de roulement sont des billes (20).

11. Ensemble à roulement (104) selon l'une quelconque des revendications 1 à 9, **caractérisé en ce que** lesdits éléments de roulement sont des rouleaux (120).

12. Ensemble à roulement (4) selon l'une quelconque des revendications précédentes, **caractérisé en ce que** les orifices de drainage (24) de la bague (12) sont inclinés dans un sens de rotation (28) de la pièce tournante (8) par rapport à la pièce fixe (6).

13. Engin aéronautique (1) équipé d'un turbomoteur (2) pour sa propulsion, **caractérisé en ce qu'**il comprend au moins un ensemble à roulement (4, 104) selon l'une quelconque des revendications précédentes, ladite pièce tournante (8) étant constituée par un arbre de rotor dudit turbomoteur (2), et ledit premier injecteur (32) étant exclusivement alimenté en liquide lubrifiant par un réservoir de carburant (36) de cet engin.

14. Engin aéronautique (1) selon la revendication 13, **caractérisé en qu'**il est un missile ou un système de lancement.

## Claims

1. Bearing assembly (4, 104) comprising a fixed part (6), a rotating part (8) and a bearing (10) inserted between these fixed and rotating parts (6, 8), said bearing (10) comprising an inner ring (14) and an outer ring (12) each provided with a circulation track (16, 18, 116, 118) in contact with rolling elements (20, 120) of said bearing, one ring being fixed to said fixed part and the other ring to said rotating part (6, 8), said assembly also comprising a first liquid lubricant injector (32) designed to be fed exclusively with non-recycled liquid lubricant, **characterized in that** a plurality of drain orifices (24) passes through the ring (12) fixed to said fixed part (6), and **in that** said assembly also comprises a second liquid lubricant injector (42) automatically fed with liquid lubricant drained through collection means (38) for collecting liquid lubricant drained from the drain orifices (24), said collection means (38) communicating firstly with a reinjection circuit (40) connected to said second injector (42), and with a bypass circuit (48) designed to evacuate surplus drained liquid lubricant.

2. Bearing assembly (4, 104) according to claim 1, **characterised in that** said drained liquid lubricant collection means (38) consist of at least one annular space formed in the fixed part (6), and into which the drain orifices open up (24).

3. Bearing assembly (4, 104) according to claim 2, **characterised in that** each annular space is composed of a groove (38).

4. Bearing assembly (104) according to claim 3, **characterised in that** said drained liquid lubricant collection means consist of a plurality of grooves (38) at an axial spacing from each other and each cooperating with a circumferential group (30) of drain orifices (24).

5. Bearing assembly (4, 104) according to any one of the previous claims, **characterised in that** said reinjection circuit comprises a duct (40) formed in the fixed part (6), and communicating firstly with said drained liquid lubricant collection means (38), and secondly with the second injector (42) so as to feed this second injector.

6. Bearing assembly (4, 104) according to any one of the previous claims, **characterised in that** said bypass circuit includes a duct (48) formed in said fixed part (6) and communicating with said drained liquid lubricant collection means (38).

7. Bearing assembly (4, 104) according to combined claims 6 and 7, **characterised in that** said bypass circuit duct (48) is located in line with said duct (40) of the reinjection circuit.

8. Bearing assembly (4, 104) according to any one of the previous claims, **characterised in that** the fixed part (6) is fixed to said outer ring (12), and **in that** the rotating part (8) is fixed to said inner ring (14).

9. Bearing assembly (4, 104) according to any one of the previous claims, **characterised in that** said first and second injectors (32, 42) are fixed to said fixed part (6), and oriented so as to eject liquid lubricant between the two rings (12, 14).

10. Bearing assembly (4) according to any one of the previous claims, **characterised in that** said bearing elements are balls (20).

11. Bearing assembly (104) according to any one of claims 1 to 9, **characterised in that** said bearing elements are rollers (120).

12. Bearing assembly (4) according to any one of the previous claims, **characterised in that** the drain orifices (24) provided on the ring (12) are inclined in the direction of rotation (28) of the rotating part (8) with respect to the fixed part (6).

13. Aeronautical vehicle (1) equipped with a turbo-shaft engine (2) for its propulsion, **characterised in that** it includes at least one bearing assembly (4, 104) according to any one of the previous claims, said rotating part (8) being composed of a rotor shaft of said turbo-shaft engine (2), and said first injector (32) being fed exclusively with liquid lubricant from a fuel tank (36) on this vehicle.

14. Aeronautical vehicle (1) according to claim 13, **characterised in that** it is a missile or a launch system.

## Patentansprüche

1. Wälzlageranordnung (4, 104) mit einem feststehenden Teil (6), einem drehenden Teil (8) sowie einem Wälzlager (10), das zwischen diesem feststehenden und diesem drehenden Teil (6, 8) angeordnet ist, wobei dieses Wälzlager (10) einen Innenring (14) und einen Außenring (12) umfasst, die jeweils eine Laufbahn (16, 19, 116, 118) aufweisen, die sich in Kontakt mit den Wälzelementen (20, 120) dieses Wälzlagers befinden, und die an einem der genannten feststehenden und drehenden Teile (6, 8) bzw. am anderen dieser Teile befestigt sind, wobei diese Wälzlageranordnung ferner eine erste Einspritzdüse (32) für Schmierflüssigkeit aufweist, die dazu gedacht ist, ausschließlich mit nicht rückgewonnener Schmierflüssigkeit gespeist zu werden,
**dadurch gekennzeichnet,**
**dass** durch den Ring (12), der an dem feststehenden Teil (6) befestigt ist, eine Mehrzahl von Ablauföffnungen (24) verlaufen, und dass die Wälzlageranordnung ferner eine zweite Einspritzdüse (42) für Schmierflüssigkeit aufweist, die automatisch mit abgelaufener Schmierflüssigkeit gespeist wird, und zwar über Auffängmittel (38) für die abgelaufene Schmierflüssigkeit, die aus den Ablauföffnungen (24) austritt, wobei diese Auffangmittel (38) gleichzeitig mit einem Wiedereinspritzkreis (40), der mit der zweiten Einspritzdüse (42) verbunden ist, sowie mit einem Ableitungskreis (48), der zur Abführung einer überflüssigen Menge an abgelaufener Schmierflissigkeit bestimmt ist, in Verbindung stehen.

2. Wälzlageranordnung (4, 104) nach Anspruch 1,
**dadurch gekennzeichnet,**
**dass** die Auffangmittel (38) für die abgelaufene Schmierflüssigkeit aus mindestens einem ringförmigen Raum gebildet sind, der in dem feststehenden Teil (6) ausgeführt ist und in den die Ablauföffnungen (24) münden.

3. Wälzlageranordnung (4, 104) nach Anspruch 2,
**dadurch gekennzeichnet,**
**dass** jeder ringförmige Raum von einer Auskehlung (38) gebildet wird.

4. Wälzlageranordnung (4, 104) nach Anspruch 3,
**dadurch gekennzeichnet,**
**dass** die Auffangmittel für die abgelaufene Schmierflüssigkeit von einer Mehrzahl von Auskehlungen (38) gebildet werden, die axial voneinander beabstandet sind und jeweils mit einer am Außenumfang befindlichen Gruppe (30) von Ablauföffnungen (24) zusammenwirken.

5. Wälzlageranordnung (4, 104) nach einem der vorigen Ansprüche,
**dadurch gekennzeichnet,**
**dass** der genannte Wiedereinspritzkreis eine Leitung (40) umfasst, die in dem feststehenden Teil (6) ausgeführt ist und einerseits mit den Auffangmitteln (38) für die abgelaufene Schmierflüssigkeit und andererseits mit der zweiten Einspritzdüse (42) in Verbindung steht, um diese zu speisen.

6. Wälzlageranordnung (4, 104) nach einem der vorigen Ansprüche,
**dadurch gekennzeichnet,**
**dass** der genannte Ableitungskreis eine Leitung (48) umfasst, die in dem feststehenden Teil (6) ausgeführt ist und mit den Auffangmitteln (38) für die abgelaufene Schmierflüssigkeit in Verbindung steht.

7. Wälzlageranordnung (4, 104) nach den Ansprüchen 6 und 7 zusammengenommen,
**dadurch gekennzeichnet,**
**dass** sich die Leitung (48) des Ableitungskreises in der Verlängerung der Leitung (40) des Wiedereinspritzkreises befindet.

8. Wälzlageranordnung (4, 104) nach einem der vorigen Ansprüche,
**dadurch gekennzeichnet,**
**dass** das feststehende Teil (6) an dem Außenring (12) befestigt ist und dass das drehende Teil (6, 8) an dem Innenring (14) befestigt ist.

9. Wälzlageranordnung (4, 104) nach einem der vorigen Ansprüche,
**dadurch gekennzeichnet,**
**dass** die erste und die zweite Einspritzdüse (32, 42) an dem feststehenden Teil (6) befestigt sind und dergestalt ausgerichtet sind, dass sie die Schmierflüssigkeit zwischen die beiden Ringe (12, 14) spritzen.

10. Wälzlageranordnung (4, 104) nach einem der vorigen Ansprüche,
**dadurch gekennzeichnet,**
**dass** die genannten Wälzelemente Kugeln (20) sind.

11. Wälzlageranordnung (4, 104) nach einem der vorigen Ansprüche,
**dadurch gekennzeichnet,**
**dass** die genannten Wälzelemente Rollen (120) sind.

12. Wälzlageranordnung (4, 104) nach einem der vorigen Ansprüche,
**dadurch gekennzeichnet,**
**dass** die Ablauföffnungen (24) des Rings (12), bezogen auf das feststehende Teil (6), in einer Drehrichtung (28) des drehenden Teils (8) geneigt sind.

13. Luftfahrzeug (1), das zu seinem Antrieb mit einem Turbomotor (2) ausgerüstet ist,
**dadurch gekennzeichnet,**
**dass** es mindestens eine Wälzlageranordnung (4, 104) nach einem der vorigen Ansprüche aufweist, wobei das drehende Teil (8) von einer Rotorwelle dieses Turbomotor (2) gebildet wird, und wobei die erste Einspritzdüse (32) ausschließlich mit Schmierflüssigkeit aus einem Brennstofftank (36) dieses Luftfahrzeugs gespeist wird.

14. Luftfahrzeug (1) nach Anspruch 13,
**dadurch gekennzeichnet,**
**dass** es eine Fernlenk-Rakete oder ein Abschuss-Flugkörper ist.
